Europäisches Patentamt

European Patent Office

Office européen des brevets

(11) Publication number: **0 294 085 B1**

## EUROPEAN PATENT SPECIFICATION

(45) Date of publication of patent specification: **19.11.92**  (51) Int. Cl.5: **G01N 27/419**

(21) Application number: **88304720.1**

(22) Date of filing: **25.05.88**

(54) **Electrochemical elements.**

(30) Priority: **30.05.87 JP 136604/87**

(43) Date of publication of application:
**07.12.88 Bulletin 88/49**

(45) Publication of the grant of the patent:
**19.11.92 Bulletin 92/47**

(84) Designated Contracting States:
**DE**

(56) References cited:
**EP-A- 0 020 938     EP-A- 0 134 137
EP-A- 0 142 992     DE-C- 2 747 467
FR-B- 2 374 640     GB-A- 2 052 761
GB-A- 2 081 908**

(73) Proprietor: **NGK INSULATORS, LTD.
2-56, Suda-cho, Mizuho-ku
Nagoya-shi, Aichi 467(JP)**

(72) Inventor: **Nishizawa, Hitoshi Iwakura-Danchi
1 Nakaura Higashishin-Machi
Iwakura City Aichi Pref.(JP)**
Inventor: **Shibata, Kazuyoshi NGK Minami-
Kazoku Apartments
15 Takeda-Cho 2-Chome Mizuho-Ku
Nagoya City Aichi Pref.(JP)**

(74) Representative: **Paget, Hugh Charles Edward
et al
MEWBURN ELLIS & CO. 2/3 Cursitor Street
London EC4A 1BO(GB)**

Rank Xerox (UK) Business Services

## Description

The present invention relates to electrochemical elements. More particularly, the invention relates to electrochemical elements to be used for controlling combustion of automobile engines or controlling combustion in a variety of industrial furnaces. The invention is specifically directed to electrochemical elements having excellent response, operability at low temperatures, and durability.

Heretofore, electrochemical elements which each comprise a dense solid electrolyte and at least a pair of cermet electrodes provided in contact with this dense solid electrolyte and which have been simultaneously fired have been well known as sensors capable of detecting the concentrations of various gas components in gases to be measured. For instance, sensors for determining the concentration of oxygen according to the principle of oxygen concentration cells with use of a zirconia porcelain as an oxygen ion conductive solid electrolyte have been developed as oxygen sensors for detecting the concentration of oxygen in combustion exhaust gases emitted from automobile engines, or the concentration of oxygen in combustion exhaust gases emitted from industrial furnaces, boilers or the like. As for internal combustion engines or the like, in order to control the air-fuel ratio of a mixed gas generally consisting of air and a fuel to an intended value at a high accuracy, the amount of the fuel to be fed to the internal combustion engine or the like is controlled by detecting the concentration of oxygen in exhaust gases, which concentration has correlation with the air-fuel ratio, with use of the above sensor.

However, when the solid electrolyte and the electrodes are formed by simultaneous firing in electrochemical elements such as the above oxygen sensors, it is very difficult to attain all the features as excellent operability at low temperatures, response, and durability at the same time.

That is, in order to obtain electrochemical elements having excellent durability, the firing needs to be effected at temperatures high enough to sufficiently sinter a dense solid electrolyte body. At that time, cermet electrodes are sintered excessively because the solid electrolyte as its base shrinks during the firing or the sintering of the cermet electrodes is promoted with a flux oozing out from the solid electrolyte body with sintering of the solid electrolyte body. Consequently, it lowers porosity of the electrode layers to lessen an effective area of the electrodes. Thus, this leads to deterioration in operability at low temperatures and response. On the other hand, when the firing temperature is lowered, operability at low temperatures and response are improved. However, porcelain is not sufficiently sintered, so that durability is deteriorated.

Therefore, the present invention seeks to solve the above-mentioned problems.

According to the present invention, there is a provided an electrochemical element as set out in claim 1.

In the present invention, the porous solid electrolyte layer is interposed between the electrode and the dense solid electrolyte body, and serves to improve activity of the electrode. In addition to the one of the first and second electrodes, another porous solid electrolyte is preferably interposed between the other electrode and the dense solid electrolyte layer.

Further, it is preferable to provide a second dense solid electrolyte body and third and fourth cermet electrodes which are formed in contact with the second dense solid electrolyte through simultaneously sintering them, and to expose the third cermet electrode to substantially the same gas atmosphere as that of the first cermet electrode, whereby a wider range of gases can be measured at higher precision. In this case, a compact structure can be attained by making the first electrode and the third electrode of a single common electrode.

The gas tightness of the dense solid electrolyte body in the present invention has only to be such that a diffused amount of a gas reaching the first electrode through the dense solid electrolyte body from the space for the exterior gas to be measured is small enough to be ignored as compared with that of the gas reaching the first electrode directly or through the diffusion-resisting means from the space for the gas to be measured. Ordinarily, the solid electrolyte having an open porosity of less than 1% is preferred.

On the other hand, since the porous solid electrolyte layer needs to have porosity great enough to not promote sintering of the electrode through simultaneous firing, solid electrolyte having an open porosity of 2 to 50% after the firing is preferred.

These and other optional features and advantages of the present invention will be appreciated upon reading of the invention when taken in conjunction with the attached drawings, with the understanding that some modifications, variations, and changes of the same could be made by the skilled person in the art to which the invention pertains.

For a better understanding of the invention, reference is made to the attached drawings, wherein:

Fig. 1 is a sectional view of an embodiment of the electrochemical element according to the present invention; and

Figs. 2 to 6 are sectional views of other embodiments of the electrochemical elements according to the present invention, respectively.

A process for forming the porous solid electrolyte layer and the dense solid electrolyte body in the present invention will be explained as follows.

First, the porous solid electrolyte layer is formed as follows:

A material as disclosed in Japanese patent application Laid-open No. 60-135,756 which is removed by heating is pulverized, and mixed into a solid electrolyte-forming powdery material in an amount of 15 to 70% by volume, preferably in an amount of 30 to 50% by volume of a total powder, followed by shaping and firing.

Or, a ceramic powder which is capable of being sintered at temperatures higher than that of a solid electrolyte such as alumina is mixed into a solid electrolyte-forming powdery material in an amount of less than 50 molar %, preferably in an amount of 15 to 30 molar % of a total powder, followed by shaping and firing.

Alternatively, while a solid electrolyte material having a lower sintering temperature, for instance, partially stabilized zirconia, is used for a dense solid electrolyte body, a solid electrolyte material having a higher sintering temperature, for instance, fully stabilized zirconia is used for a porous solid electrolyte layer.

Further, the particle size may be varied. For instance, fine powder having a specific surface area of not less than 15 $m^2/g$ is used for the dense solid electrolyte layer and coarse powder having a specific surface area of 10 $m^2/g$ for the porous electrolyte layer. Alternatively, a packing density before firing is varied by varying the particle size distribution, for example, by using a high packing density powder consisting of fine powder and coarse powder at the same ratio as the dense solid electrolyte body and only a coarse powder as the porous solid electrolyte layer, respectively, consequently varying the porosity after the firing.

In addition, the porosity after the firing may be varied by using a readily sinterable powder obtained by a dry type milling process as a dense solid electrolyte body and a not easily sinterable powder obtained by a wet type milling process as a porous solid electrolyte layer, respectively, or by varying addition amounts of a sintering aid to be added to the dense solid electrolyte body and the porous solid electrolyte layer.

Further, the above methods may appropriately be combined.

The porous solid electrolyte layer is formed in a filmy fashion on a shaped body giving the dense solid electrolyte body according to a conventional technique such as screen printing, spraying, dipping, transferring or the like by using a liquid or paste of the solid electrolyte material selected from the above methods, an organic binder, a solvent, etc. Alternatively, a green sheet giving a porous solid electrolyte layer is formed according to a doctor blade process or the like, and press adhered to a green sheet giving a dense solid electrolyte under heating, which is then simultaneously fired.

As an ion-conductive solid electrolyte used in the present invention, conventional materials, for instance, zirconia porcelain, $Bi_2O_3$-$Y_2O_3$ base solid solution, etc. as an oxygen-ion conductor, $SrCe_{0.95}Yb_{0.05}O_3$ as a proton conductor, $CaF_2$ as halogen-ion conductor may be used.

The cermet electrode preferably used in the present invention is formed by mixing a powder of a platinum group metal such as platinum, rhodium, palladium, iridium, ruthenium or osmium, or a metal such as gold or nickel with a ceramic powder such as zirconia, yttria or alumina such that the metallic powder accounts for not less than 40% by volume, preferably from 60 to 80% by volume of the entire powder, adding an organic binder, a solvent, etc. to the mixture to obtain a liquid or pasty preparation, forming a film of the thus obtained mixture on a shaped body giving the dense solid electrolyte body or the porous solid electrolyte layer according to screen printing, spraying, dipping, transferring or the like, and simultaneously firing it with the latter.

As the electrodes in the present invention, besides the cermet electrode, an electrode formed by a conventional technique such as sputtering, ion plating, plating, vapor deposition or the like after the firing the solid electrolyte body may be used as a part of the electrodes.

As the diffusion-resisting means in the present invention, a porous ceramic layer, pin holes, a narrow flat space, or an appropriate combination thereof may be used. When the porous ceramic layer is used, it is preferable to form this layer by firing simultaneously with the solid electrolyte, the cermet electrodes, etc. The porous ceramic layer may be formed by mixing a ceramic material such as alumina, zirconia, spinel, or magnesia, or a mixture thereof, and if need be, the above material which is removed by heating, with an organic binder, a solvent, etc. to obtain a liquid or pasty preparation, and forming a film on a shaped body giving the dense solid electrolyte from the above preparation according to a conventional technique such as screen printing, spraying, dipping, transferring or the like. Alternatively, the porous ceramic layer may be formed by forming a green sheet according to a doctor blade process, press adhering it to a green sheet giving the dense solid electrolyte under heating, and firing them simultaneously.

When the electrochemical element according to the present invention is used as an electrochemically pumping cell, porosity inside an electrode layer increases to lower a diffusion resistance. Thus, the solid electrolyte in contact with the negative electrode is less deteriorated through being reduced due to extreme drop in the concentration of oxygen near the electrode. However, this has the merit that even if the solid electrolyte is deteriorated, the solid electrolyte is restored more speedily as compared with the dense solid electrolyte body.

In the following, embodiments according to the present invention will be explained in more detail with reference to the attached drawings, and the construction of the present invention will more specifically be made clearer.

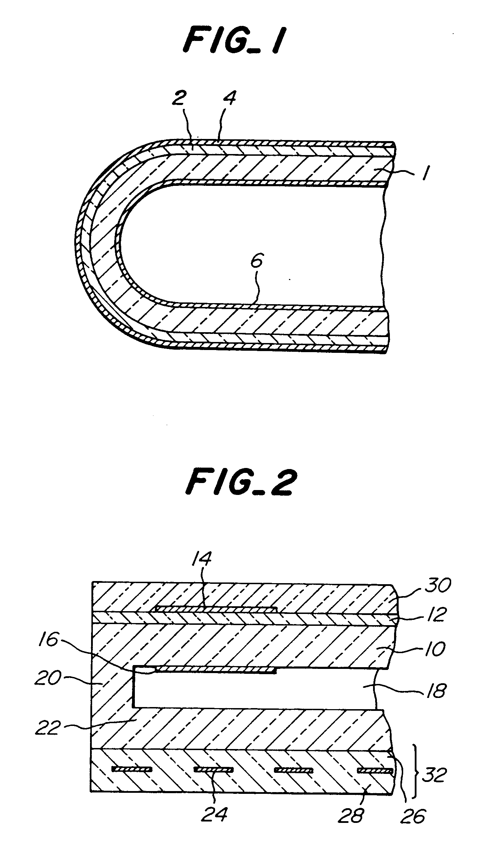

Fig. 1 shows a sectional view of an oxygen sensor as an embodiment of the electrochemical element according to the present invention.

A porous solid electrolyte layer 2 and then a first electrode 4 are successively coated on an outer surface of a bottom-closed cylindrical dense solid electrolyte body 1 made of partially stabilized zirconia, and they are integrally fired. On the other hand, a second electrode 6 is formed on an inner surface of the solid electrolyte body by plating. In this case, the outer surface of the solid electrolyte body 1 is located on a side exposed to a space for a gas to be measured, while the inner surface is located on a side exposed to air as a reference gas. Thereby, a partial pressure of $O_2$ in the gas to be measured can be detected based on an electromotive force generated between the first electrode 4 and the second electrode 6 with reference to air.

Fig. 2 shows an embodiment of an oxygen sensor for detecting an $O_2$ partial pressure in the gas to be measured by utilizing the principle of an oxygen concentration cell as in Fig. 1.

In this sensor, a porous solid electrolyte layer 12, a first electrode 14, and a porous ceramic layer 30 are successively coated on one surface of a planar dense solid electrolyte 10 by a screen printing process, and a second electrode 16 is similarly coated on the other surface. To this laminate are piled and integrated a spacer member 20 with a cut portion for an air passage 18, a lid 22, and electrically insulating ceramic members 26 and 28 holding a heating pattern 24 among them, which is fired to form an electrochemical element.

In this case, since the electrochemical element is heated by applying an electrical current to the heating pattern 24 from an external electric source, an $O_2$ partial pressure at lower temperatures in a gas to be measured can be detected. The porous ceramic layer 30 is a protective layer to protect the first electrode 14 from materials such as phosphorus, lead, etc. contained in the gas to be measured.

Different from Figs. 1 and 2, Fig. 3 is a sectional view of an oxygen sensor using the electrochemically pumping principle. A porous diffusion layer 48 is formed on the outer side of a first electrode 44 as a diffusion-resisting means. A porous ceramic layer 49 is formed on the outer side of the second electrode as a getter. Reference numerals 40 and 42 denote a dense solid electrolyte body and a porous solid electrolyte layer, respectively.

Namely, when a DC voltage is applied between the first electrode 44 and a second electrode 46 from an external power source, oxygen ions are pumped up from the first electrode 44 toward the second electrode 46 to lower the $O_2$ concentration near the first electrode 44. At that time, the $O_2$ concentration in the gas to be measured is detected based on an amount of $O_2$ diffusing into the first electrode 44 through the porous diffusing layer 48 as the diffusion-resisting means having a preset diffusion resistance.

Fig. 4 is an oxygen sensor based on the electrochemically pumping principle as in Fig. 3. What is different from Fig. 3 are that a second porous solid electrolyte layer 53 is provided between a second electrode 56 and a dense solid electrolyte layer 50 and fourth electrodes 62 are provided inside the dense solid electrolyte 50, opposed to a third electrode (which is united with a first electrode in this embodiment) 54, to form an oxygen concentration cell, whereby an $O_2$ partial pressure near the third (first) electrode varying due to the electrochemical pumping between the first (third) electrode 54 and the second electrode 56 is measured. A reference gas atmosphere is formed by effecting fine pumping between the third (first) electrode 54 and the fourth electrodes 62 and pouring oxygen ions into the fourth electrodes 62. The electrically insulating porous ceramic layers 64 are provided to store the above reference gas atmosphere, electrically isolate the second electrode 56 from the fourth electrodes 62, and reduce influences giving the potential of the fourth electrode 62 due to the pumping between the first (third) electrode 54 and the second electrode 56. Reference numerals 52, 58 and 60 are a porous solid electrolyte layer, a porous diffusion layer, and a porous ceramic layer, respectively.

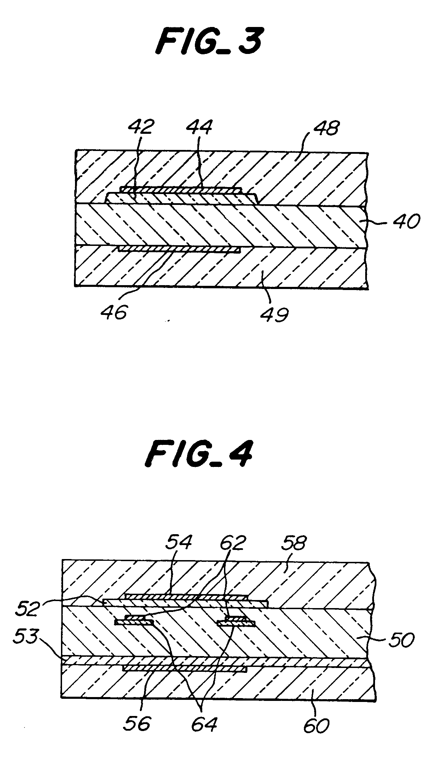

Fig. 5 is an electrochemical element having two sets of electrochemical cells each comprising a solid electrolyte and a pair of electrodes provided in contact with the solid electrolyte. Porous solid electrolyte layers 72, 74, 76 and 78 are provided between each of all electrodes 64, 66, 68 and 70 and a dense solid electrode body 60 or 62, respectively. A flat space 88 to which the first and third electrodes are exposed is a diffusion-resisting means having a preset diffusion resistance, and is communicated, through a gas introduction hole 90, with a space for a gas to be measured. The first and second dense solid electrolyte bodies 60 and 62 are connected and integrated together through a spacer member 61 made of the same material as that of the electrolyte bodies 60 and 62, thereby giving a firm structure.

A ceramic heater layer 92 is buried between lid members (dense solid electrolyte bodies) 82, 84, which enables measurement of gases at lower temperatures.

Reference numerals 86 and 94 denote a porous ceramic layer and an air passage, respectively.

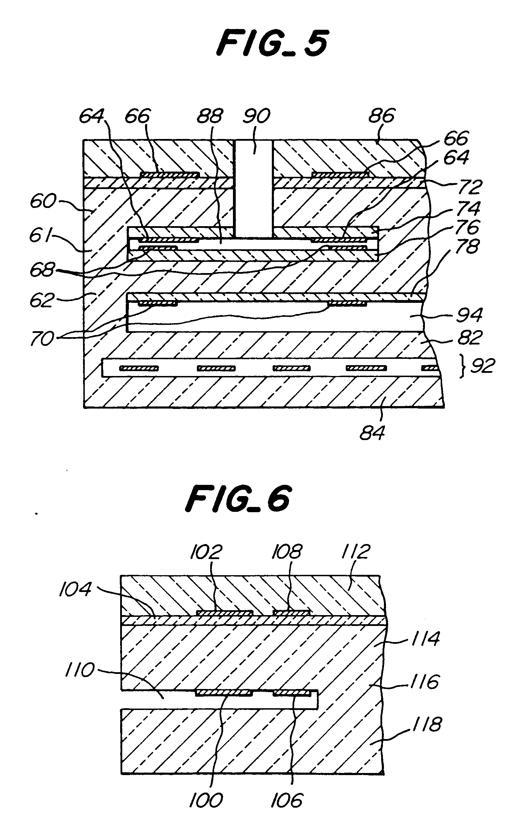

Further, Fig. 6 shows an embodiment in which a porous solid electrolyte layer 104 is provided on a side of not a first electrode 100 but a second electrode 102. First through fourth electrodes are formed in contact with a single solid electrolyte body.

In Fig. 6, a flat space 110 is a diffusion-resisting means, and a porous ceramic layer 112 is a protective layer for the electrodes as mentioned above. Reference numerals 106, 108, 114,116 and 118 denote a third electrode, a fourth electrode, a dense solid electrolyte layer, a spacer member, and a lid member, respectively.

Next, examples of the electrochemical elements according to the present invention will be explained.

Example 1

One tenth part by weight of $A\ell_2O_3$ are a sintering aid, 2 parts by weight of polyvinyl alcohol as a shaping aid, and water were added and mixed into one hundred parts by weight of a powder consisting of 95 molar % of $ZrO_2$ and 5 molar % of $Y_2O_3$, which was pressed to obtain a bottom-closed cylindrical shaped body (giving a dense solid electrolyte body 1 after firing). A slurry consisting of 100 parts by weight of a mixed powder of 70 parts by volume of a powder having 92 molar % of $ZrO_2$ and 8 molar % of $Y_2O_3$ and 30 parts by volume of $A\ell_2O_3$, 4 parts by weight of polyvinyl alcohol, and water was sprayed onto the outer side of the cylindrical shaped body as a thick film (giving a porous solid electrolyte layer 2 after the firing). Then, a paste containing 95 parts by weight of platinum and 5 parts by weight of powdery zirconia (giving a first electrode 4 after the firing) was coated onto the thick film on the shaped body, which was fired at 1,400°C for 3 hours. Thereafter, a second electrode 6 was formed on the inner side of the dense solid electrolyte body by non-electrolytic plating with platinum, thereby obtaining an electrochemical element shown in Fig. 1.

The open porosity of the dense solid electrolyte body 1 of the thus obtained electrochemical element was 0.1%, and that of the porous solid electrolyte layer 2 was 3%.

This electrochemical element was compared with two kinds of conventional ones having no porous solid electrolyte layer 2. The conventional electrochemical elements were fired at 1,400°C and 1,350°C for 3 hours, respectively, and had the open porosities of 0.1% and 2%, respectively. The element fired at 1,350°C was not fully fired.

Each of the elements was inserted into propane gas having $\lambda = 0.9$, and the outer side (the first electrode 4) and the inner side (the second electrode 6) were exposed to a propane combustion exhaust gas and air, respectively. The first and second electrodes were connected to a DC potentiometer having an input impedance of 10 M ohms through lead wires, and a potential difference generated between the electrodes was measured. As the temperature of the exhaust gas was gradually lowered from 350°C, the temperature of the gas at which the potential difference drops to 0.4 V or less was measured. Consequently, the temperatures were 300°C and 260°C for the conventional elements fired at 1,400°C and 1,350°C, respectively. To the contrary, it was 250°C for the element according to the present invention. Thus, it was revealed that the element according to the present invention had excellent operability at low temperatures.

Meanwhile, each of these three elements was inserted into propane gas, and was subjected to a temperature-cycling test (total number of cycling being 500 times) in which each element was maintained at a gas temperature of 900°C for 30 minutes and at 200°C for 30 minutes). Consequently, it was revealed that two of three conventional elements fired at 1,350°C were broken, but none of the conventional elements fired at 1,400°C and the elements according to the present invention were broken. Thus, it was revealed that the electrochemical elements according to the present invention had sufficient durability.

Example 2

Eight parts by weight of polyvinyl butyral resin and 4 parts by weight of dioctylphthalate as a shaping aid were added and mixed into 100 parts by weight of a powder consisting of 97 molar % of $ZrO_2$ and 3 molar % of $Y_2O_3$, which was shaped to form a planar zirconia shaped green body in a thickness of 1 mm according to a doctor blade process (giving a dense solid electrolyte body 40 after firing). A paste containing 50 parts by volume of a powder consisting of 90 molar % of $ZrO_2$ and 10 molar % of $Y_2O_3$ and 50 parts by volume of powdery theobromine was coated onto the above zirconia shaped body according to a screen printing process as a thick film of 30 μm in thickness (giving a porous solid electrolyte layer 42 after the firing). Then, a paste containing 95 parts by weight of platinum and 5 parts by weight of zirconia powder was coated onto the thick film (giving a first electrode 44 after the firing) and onto the zirconia shaped body on the side opposite to the thick film (giving a second electrode 46 after the firing).

Then, to the thus obtained laminate structure were piled and press adhered a 0.2 mm thick zirconia shaped green body consisting of 75 parts by volume of a powder of 90 molar % of $ZrO_2$ and 10 molar % of $Y_2O_3$ and 25 parts by volume of theobromine powder (giving a porous diffusion layer 48 after the firing) and a 0.2 mm thick zirconia shaped green body consisting of 50 parts by volume of a powder of 90 molar % of $ZrO_2$ and 10 molar % of theobromine powder (giving a porous diffusion layer 48 after the firing) under heating, which was fired at 1,400°C to produce an electrochemical element.

As mentioned above, according to the present invention, since the porous solid electrolyte layer is provided through simultaneous firing between at least one of the first and second cermet electrodes and the solid electrolyte body, the invention has the merit that electrochemical elements having excellent response and durability can be obtained.

## Claims

1. An electrochemical element comprising a solid electrolyte (1,2;10,12;40,42;50,52,53;60,62,72,74,76,78;10-4,114) and a pair of electrodes (4,6;14,16;54,56;64,66,68,70;100,102,106,108) provided in contact with the solid electrolyte, said solid electrolyte consisting of a dense solid electrolyte body (1;10;40;50;60,62;114) and a porous solid electrolyte layer (2;12;42;52,53;72,74,76,78;104,114), at least one of said pair of electrodes being formed in contact with the porous solid electrolyte layer when being fired simultaneously with the dense solid electrolyte body and the porous solid electrolyte layer, characterised in that said electrode formed in contact with the porous solid electrolyte layer is a cermet electrode (4;14;44;54,56;64,66,68,70;102,108) and in that said porous solid electrolyte layer is interposed between the cermet electrode and the dense solid electrolyte body in the direction perpendicular to the cermet electrode.

2. An electrochemical element according to claim 1, wherein said cermet electrode is substantially exposed to a space for a gas to be measured.

3. An electrochemical element according to claim 1, wherein said cermet electrode is substantially exposed to a space for a reference gas.

4. An electrochemical element according to any one of claims 1 to 3, wherein said pair of electrodes are both cermet electrodes formed by firing simultaneously with the dense solid electrolyte body and the porous solid electrolyte layer.

5. An electrochemical element according to claim 4, wherein said solid electrolyte consists of a dense solid electrolyte body (50;60,62) and first and second porous solid electrolyte layers (52,53;72,74,76,78), said pair of electrodes being cermet electrodes (54,56;64,66,68,70) which are formed in contact with said first and second porous solid electrolyte layers, respectively.

6. An electrochemical element according to any one of the preceding claims wherein said pair of electrodes comprises first and second electrodes of which the first electrode is exposed, through a diffusion-resisting means (30;48;58;86,88;110,112) having a preset diffusion resistance, to a space for a gas to be measured.

7. An electrochemical element according to claim 6, wherein said first electrode is said cermet electrode which is formed in contact with said porous solid electrolyte layer by firing simultaneously with the dense solid electrolyte body and the porous solid electrolyte layer.

8. An electrochemical element according to claim 6 or claim 7 wherein said diffusion-resisting means is a porous ceramic layer (30;48;58;86;112) formed by firing simultaneously with the solid electrolyte body.

9. An electrochemical element according to any one of claims 6 to 8, further comprising a second dense solid electrolyte body (62) and third and fourth cermet electrodes (68,70) formed in contact with the second dense solid electrolyte body by firing simultaneously with the second dense solid electrolyte body, wherein said third cermet electrode (68) is exposed to the same gas atmosphere as that of the first cermet electrode (64).

10. An electrochemical element according to claim 9, wherein the first and third cermet electrodes are formed by a single common electrode.

11. An electrochemical element according to claim 9 or claim 10, wherein said first and second dense solid electrolyte bodies are formed by a single solid electrolyte body (114).

**Patentansprüche**

1. Elektrochemisches Element umfassend einen festen Elektrolyten (1,2;10,12;40,42;50,52,53;60,62,72,74,76,78;10-4,114) und ein Paar von Elektroden- (4,6;14,16;54,56;64,66,68,70;100,102,106,108), die in Kontakt mit dem festen Elektrolyten vorliegen, wobei dieser feste Elektrolyt aus einem dichten, festen Elektrolytkörper (1;10;40;50;60,62;114) und einer porösen, festen Elektrolytschicht (2;12;42;52,53;72,74,76,78;104,114) besteht, wenigstens eine dieses Paares von Elektroden in Kontakt mit der porösen, festen Elektrolytschicht gebildet wird, wenn sie gleichzeitig mit dem dichten, festen Elektrolytkörper und der porösen, festen Elektrolytschicht gebrannt wird,
dadurch gekennzeichnet, daß diese in Kontakt mit der porösen, festen Elektrolytschicht gebildete Elektrode eine Cermet-Elektrode (4;14;44;54,56;64,66,68,70;102,108) ist, und daß diese poröse, feste Elektrolytschicht zwischen der Cermet-Elektrode und dem dichten, festen Elektrolytkörper in der Richtung senkrecht zu der Cermet-Elektrode zwischengelegt ist.

2. Elektrochemisches Element nach Anspruch 1, worin diese Cermetelektrode im wesentlichen einem Zwischenraum für ein zu messendes Gas exponiert ist.

3. Elektrochemisches Element nach Anspruh 1, worin diese Cermetelektrode im wesentlichen einem Zwischenraum für ein Referenzgas exponiert ist.

4. Elektrochemisches Element nach einem der Ansprüche 1 bis 3, worin dieses Paar von Elektroden beide Cermetelektroden sind, die durch gleichzeitiges Brennen mit dem dichten, festen Elektrolytkörper und der porösen, festen Elektrolytschicht gebildet sind.

5. Elektrochemisches Element nach Anspruch 4, worin dieser feste Elektrolyt aus einem dichten, festen Elektrolytkörper (50;60,62) und ersten und zweiten, porösen, festen Elektrolytschichten (52,53;72,74,76,78) besteht, wobei dieses Paar von Elektroden Cermetelektroden (54,56;64,66,68,70) sind, die jeweils in Kontakt mit diesen ersten und zweiten, porösen, festen Elektrolytschichten gebildet sind.

6. Elektrochemisches Element nach einem der vorhergehenden Ansprüche, worin dieses Paar von Elektroden erste und zweite Elektroden umfaßt, wovon die erste Elektrode durch eine diffusionsfeste Einrichtung (30;48;58;86,88;110,112), die einen voreingestellten Diffusionswiderstand hat, einem Zwischenraum für ein zu messendes Gas exponiert ist.

7. Elektrochemisches Element nach Anspruch 6, worin diese erste Elektrode diese Cermetelektrode ist, welche in Kontakt mit dieser porösen, festen Elektrolytschicht durch gleichzeitiges Brennen mit dem dichten, festen Elektrolytkörper und der porösen, festen Elektrolytschicht gebildet ist.

8. Elektrochemisches Element nach Anspruch 6 oder Anspruch 7, worin diese diffusionsfeste Einrichtung eine poröse, keramische Schicht (30;48;58;86;112) ist, gebildet durch gleichzeitiges Brennen mit dem festen Elektrolytkörper.

9. Elektrochemisches Element nach einem der Ansprüche 6 bis 8, weiterhin umfassend einen zweiten, dichten, festen Elektrolytkörper (62) und dritte und vierte Cermetelektroden (68,70), gebildet in Kontakt mit dem zweiten, dichten, festen Elektrolytkörper durch gleichzeitiges Brennen mit dem zweiten, dichten, festen Elektrolytkörper, wobei diese dritte Cermetelektrode (68) derselben Gasatmosphare wie derjenigen der ersten Cermetelektrode (64) exponiert ist.

10. Elektrochemisches Element nach Anspruch 9, worin die erste und dritte Cermetelektrode durch eine einzige, gemeinsame Elektrode gebildet werden.

11. Elektrochemisches Element nach Anspruch 9 oder Anspruch 10, worin dieser erste und zweite, dichte, feste Elektrolytkörper durch einen einzigen, festen Elektrolytkörper (114) gebildet wird.

**Revendications**

1. Elément électrochimique comprenant un électrolyte solide (1,2;10,12;40,42;50,52,53;60,62,72,74,76,78;10-

4,114) et une paire d'électrodes (4,6;14,16;54,56;64,66,68,70;100,102,106,108) prévues en contact avec l'électrolyte solide, ledit électrolyte solide étant constitué d'un corps dense d'électrolyte solide (1;10;40;50;60,62;114) et d'une couche poreuse d'électrolyte solide (2;12;42;52,53;72,74,76,78;104,114), au moins l'une desdites paires d'électrodes étant réalisée en contact avec la couche poreuse d'électrolyte solide lors de la cuisson simultanément avec le corps dense d'électrolyte solide et la couche poreuse d'électrolyte solide, caractérisé en ce que ladite électrode formée en contact avec la couche poreuse d'électrolyte solide est une électrode cermet (4;14;44;54,56;64,66,68,70;102,108), et en ce que ladite couche poreuse d'électrolyte solide est interposée entre l'électrode cermet et le corps dense d'électrolyte solide dans la direction perpendiculaire à l'électrode cermet.

2. Elément électrochimique selon la revendication 1, dans lequel ladite électrode cermet est exposée de façon importante à un espace pour la mesure d'un gaz.

3. Elément électrochimique selon la revendication 1, dans lequel ladite électrode cermet est exposée de façon importante à un espace pour un gaz de référence.

4. Elément électrochimique selon l'une des revendications 1 à 3, dans lequel ladite paire d'électrodes sont à la fois des électrodes cermet formées par la cuisson simultanément avec le corps dense d'électrolyte solide et la couche poreuse d'électrolyte solide.

5. Elément électrochimique selon la revendication 4, dans lequel ledit électrolyte solide est constitué d'un corps dense d'électrolyte solide (50;60,62) et de première et deuxième couches poreuses d'électrolyte solide (52,53;72,74,76,78), ladite paire d'électrodes étant des électrodes cermet (54,56;64,66,68,70) qui sont formées en contact avec lesdites première et deuxième couches poreuses d'électrolyte solide, respectivement.

6. Elément électrochimique selon l'une des revendications précédentes, dans lequel ladite paire d'électrodes comprend des premiere et deuxième électrodes, dont la première électrode est exposée, par un moyen résistant à la diffusion (30;48;58;86,88;110,112) possédant une résistance préréglée à la diffusion, à un espace pour la mesure d'un gaz.

7. Elément électrochimique selon la revendication 6, dans lequel ladite première électrode est constituée par ladite électrode cermet qui est formée en contact avec ladite couche poreuse d'électrolyte solide par la cuisson simultanément avec le corps dense d'électrolyte solide et la couche poreuse d'électrolyte solide.

8. Elément électrochimique selon la revendication 6 ou la revendication 7, dans lequel ledit moyen résistant à la diffusion est constitué par une couche poreuse en céramique (30;48;58;86;112) formée par la cuisson simultanément avec le corps solide d'électrolyte.

9. Elément électrochimique selon l'une des revendications 6 à 8, comprenant en outre un deuxième corps dense d'électrolyte solide (62) et des troisième et quatrième électrodes cermet (68,70) réalisées en contact avec le deuxième corps dense d'électrolyte solide par la cuisson simultanément avec le deuxième corps dense d'électrolyte solide, dans lequel ladite troisième électrode cermet (68) est exposée à la même atmosphère de gaz que celle de la première électrode cermet (64).

10. Elément électrochimique selon la revendication 9, dans lequel les première et troisième électrodes cermet sont formées par une seule électrode commune.

11. Elément électrochimique selon la revendication 9 ou la revendication 10, dans lequel lesdits premier et deuxième corps denses d'électrolyte solide sont formés par un seul corps électrolyte solide (114).

# FIG_1

# FIG_2

EP 0 294 085 B1

## FIG_3

## FIG_4

# FIG_5

# FIG_6